# EUROPEAN PATENT APPLICATION

(11) **EP 4 227 441 A1**
(43) Date of publication of application: **16.08.2023**
(21) Application number: 22156106.1
(22) Date of filing: 10.02.2022
(51) Int. Cl.: C25B 1/23, C25B 1/55, C25B 11/054, C25B 11/085, C25B 11/087, C25B 11/031, C25B 11/069, C25B 11/095, C25B 3/21, C25B 3/26

(54) **POROUS ELECTRODE WITH A CATALYTIC ACTIVITY TOWARDS CO2 OR CO ELECTROCHEMICAL AND PHOTO-ELECTROCHEMICAL REDUCTION**

(71) Applicant: Université de Paris, 75006 Paris (FR); Centre national de la recherche scientifique, 75016 Paris (FR); Ecole Polytechnique, 91120 Palaiseau (FR); Ecole Nationale Superieure de Chimie de Paris, 75005 Paris (FR); Institut Photovoltaïque d'Ile de France - IPVF, 91120 Palaiseau (FR)
(72) Inventor: Robert, Marc, 75019 Paris (FR); Naghavi, Negar, 75016 Paris (FR); Lincot, Daniel, 92160 Antony (FR); Guerrero, Julian, 92240 Malakoff (FR); Schneider, Nathanaelle, 75014 Paris (FR)
(74) Representative: Demulsant, Xavier

(57) **Abstract**

Porous electrode for electrochemical or photoelectrochemical reduction CO or CO₂ comprising a conductive or conductive transparent or photoconductive substrate; a conductive nanoporous catalytic matrix on the substrate, which presents a hybrid of a metal oxide MO with nanopores and molecular catalyst which reduce CO or CO₂, the conductive nanoporous catalytic matrix being realized by electrodeposition of metal ions of a solvent solution which comprises also solubilized molecular catalyst, the conductive nanoporous catalytic matrix comprising a structure of metal oxide MO with nanopores, which encapsulates and integrates homogeneously the molecular catalyst.

## Description

### FIELD OF THE INVENTION

The invention relates to a porous electrode with a catalytic activity towards CO₂ or CO electrochemical and photo-electrochemical reduction.

### STATE OF ART

In the production of energy, it is reasonable to consider that CO₂ emissions will remain high in the next decades. Thus, it appears necessary to find ways to capture CO₂ gas, either for storing or valorisation purposes.

A first solution remains the use of renewable energies, which is becoming more and more common to produce electricity and avoid concomitant production of CO₂. A second solution is to perceive CO₂ as a source of elements like carbon or oxygen, and not as a waste.

For example, the promising production of synthetic fuels from CO₂ and water has been envisaged. Moreover, CO₂ electrochemical reduction to one electron occurs at a very negative potential, thus necessitating a high energy input, and leads to the formation of a highly energetic radical anion. Catalysis thus appears mandatory in order to reduce CO₂ and drive the process to multi-electronic and multi-proton reduction process, in order to obtain thermodynamically stable molecules, and with high selectivity.

Molecular catalysts that combine high selectivity and high current density for CO₂ electrochemical reduction to CO or other chemical feedstock are in high demand. Molecular transition metal catalysts offer the distinct advantage of allowing for the fine-tuning of the primary and secondary coordination spheres by manipulating the chelating environment and the steric and electronic effects of the ligands. The ability to improve catalytic efficiency and product selectivity through the rational optimization of the ligand structure is a feature not accessible to the solid-state catalysts common to current pilot-scale electrolyzer units.

In a document published in 2015, « Synthesis, characterization, and water oxidation by a molecular chromophore-catalyst assembly prepared by atomic layer deposition. The "mummy" strategy, », A. M. Lapides *et al.* have described a process for preparing multi-component films consisting of molecular light absorbing chromophores and water oxidation catalysts on mesoporous metal oxide surfaces. Atomic layer deposition (ALD) is used to embed a surface-bound chromophore in a thin layer of inert Al₂O₃. In a final step, catalyst surface-binding is stabilized by a subsequent ALD overlayer of Al₂O₃. An ALD mummy-based assembly has been used to demonstrate photoelectrochemical dehydrogenation of hydroquinone. The encapsulation is carried out by ALD, i.e. using a gas, which makes the encapsulation more complex. The nature of the metal oxide and the molecular catalyst cannot be changed easily.

The invention thus proposes to contribute to CO₂ emission mitigation by recycling it. The invention proposes active electrodes and photoelectrodes with a catalytic activity towards CO₂ reduction and a new way to prepare very active electrodes and photoelectrodes with a catalytic activity towards CO₂ reduction. The most important aspect of the invention is the ability to insert and encapsulate with control homogeneous catalysts within structured oxide nanolayers, leading to higher catalytic activity, while using few molecular material and following very simple preparation method. Such an approach may further give additional stability to the catalytic sites and is versatile, the nature of the oxide may indeed be easily tuned as well as the nature of the encapsulated molecular catalyst.

### SUMMARY OF THE INVENTION

Here, the invention relates to a porous electrode for electrochemical or photoelectrochemical reduction CO₂ or CO comprising:
- a conductive or conductive transparent or photoconductive substrate;
- a conductive nanoporous catalytic matrix on the substrate, which presents a hybrid of a metal oxide MO with nanopores and molecular catalyst which reduce CO₂ or CO,

the conductive nanoporous catalytic matrix being realized by electrodeposition of metal ions from a solvent solution which comprises also solubilized molecular catalyst,
the conductive nanoporous catalytic matrix comprising a structure of metal oxide MO with nanopores, which encapsulates and integrates homogeneously the molecular catalyst.

With these arrangements, the catalytic activity is improved compared to the state of the art which does not encapsulate the molecular catalyst in the metal oxide MO layer, and the porous electrode is suitable for electrochemical or photoelectrochemical reduction.

In various aspects, it is possible to provide for any or all of the following features taken alone or in combination.

Advantageously, the molecular catalyst is without anchoring group. Thus, there is no need to functionalise the molecular catalyst.

Advantageously, the conductive nanoporous catalytic matrix is formed by a continuous porous layer of metal oxide MO and the molecular catalyst in the structure of the continuous porous layer. Thus, the active/contact surface of the porous electrode is increased with this porous layer

In another embodiment, the conductive nanoporous catalytic matrix comprises an array of metal oxide coated nanowires on the surface of the substrate, each metal oxide coated nanowire being a metal oxide nanowire covered by a coating layer of metal oxide with nanopores and molecular catalyst which is in the coating layer. Thus, the surface area of the substrate is increased, which promotes catalytic activity. In addition, the deposition of the porous conductive catalytic matrix is a coating, which means that the shape imparted to the nanowires is retained.

Advantageously, the porous electrode has a concentration of molecular catalyst equal or superior to 0.5 nmol per cm² of the porous electrode. Thus, only a small amount of molecular catalyst is required to achieve results with good catalytic activity, and the catalytic activity can be improved by increasing the amount of molecular catalyst encapsulated in the metal oxide structure.

Advantageously, the porous electrode is presenting optical transmission higher than 60% at wavelengths between 350 and 1300 nm. Thus, the porous electrode is transparent, allowing its use at the surface (on top) of a photoelectrode or allowing to be easily combined to a photoelectrode.

In another embodiment, the substrate is a photoelectrode comprising:
- a back contact;
- a p-type semiconductor absorber allowing the capture of a large part of the visible solar spectrum;
- a n-type semiconductor for forming a pn junction with the absorber for separation of electrons and holes;
- a top transparent and conductive layer for recovering the electrons formed at the pn junction;
advantageously, the photoelectrode is a simple or multijunction solar cell.

Thus, the whole system can be used as a photoelectrode allowing the energy produced by the photoelectrode to be used to carry out the reduction of CO₂ or CO.

Advantageously, the molecular catalyst is water-soluble. Thus, the metal oxide can be deposited in an aqueous medium without losing the molecular catalyst encapsulated in the conductive nanoporous catalytic matrix.

More advantageously, the molecular catalyst is chosen among: metal quaterpyridines, metal porphyrins, metal phthalocyanines or metal corroles, which presents water soluble substituents, with for example metal being Co, Ni, Sn, Cu or Fe. Thus, the catalytic activity of the porous electrode is improved by the use of these molecular catalyst.

Advantageously, the metal oxide MO is chosen from the following list: aluminum oxide, titanium oxide, or a doped wide band gap metal oxide. More advantageously, the metal oxide MO is zinc oxide. These metal oxides are transparent and can therefore be integrated into photoreduction systems.

In another embodiment, the invention relates to a process for realizing a porous electrode for CO₂ or CO electrochemical or photoelectrochemical reduction on a conductive or conductive transparent or photoconductive substrate, the process comprising the following steps:
- a step a): solubilisation of metal ions, molecular catalyst and an oxygen precursor in a solvent solution;
- a step b): applying a voltage at the substrate in the solvent solution for realizing an electrodeposition of metal ions to form a conductive nanoporous catalytic matrix,

the growth of the metal oxide MO during the electrodeposition integrating the molecular catalyst,
the conductive nanoporous catalytic matrix presents a hybrid of metal oxide MO with nanopores, which encapsulates and integrates homogeneously the molecular catalyst.

With these arrangements, the process allows to obtain porous electrodes which can be an active electrode or photoelectrode with a catalytic activity towards CO₂ or CO reduction. The process allows for porous electrodes with improved catalytic activity, while using few molecular material and following simple preparation method. Such an approach may further give additional stability to the catalytic sites and is versatile, since the nature of the oxide may be easily tuned as well as the nature of the encapsulated molecular catalyst.

In various aspects, it is possible to provide for any or all of the following features taken alone or in combination.

Advantageously, the solvent solution is a mixture comprising zinc salt such as zinc chloride and the molecular catalyst, the molecular catalyst being water soluble in the solvent solution which is water, and the electrodeposition being realized at a temperature inferior to 100°C.

The solvent solution for the deposits is water, so it is easy to obtain, it is not expensive and it is a socalled green solvent solution, because the solvent solution is ecological.

Advantageously, the molecular catalyst is chosen among: metal quaterpyridines, metal porphyrins, metal phthalocyanines or metal corroles, which present water soluble substituents, with for example metal being Co, Ni, Sn, Cu or Fe. Thus, the catalytic activity of the porous electrode is improved by the use of these molecular catalysts.

Advantageously, the step b) of electrodeposition of the metal ions forms a conductive nanoporous catalytic matrix of metal oxide MO with nanopores, which encapsulates the molecular catalyst, directly on the substrate, to obtain a continuous porous layer.

In another embodiment, the process comprises a step a0) and a step b0) before the step a):
- a step a0): solubilisation of metal ions and an oxygen precursor in a first solvent solution;
- a step b0): electrodeposition of the metal ions to form nanowires of metal oxide MO on the substrate;
- the step a): solubilisation of the metal ions with molecular catalyst and an oxygen precursor in a second solvent solution;
- the step b): electrodeposition of the metal ions of the second solvent solution to form a conductive nanoporous catalytic matrix of metal oxide MO with nanopores with encapsulated molecular catalyst on the nanowires which are coated by this conductive nanoporous catalytic matrix.

Thus, the substrate has nanowires on its surface, which increase the effective surface of the electrode. This increases the catalytic activity of the resulting porous electrode.

### BRIEF DESCRIPTION OF THE DRAWINGS

Other advantages and characteristics of the disclosed devices and methods will become apparent from reading the description, illustrated by the following figures, where:
- Figure 1 schematically represents the one-step approach used for the material deposition on conductive substrates;
- Figure 2 schematically represents the two-steps approach used for the material deposition on conductive substrates;

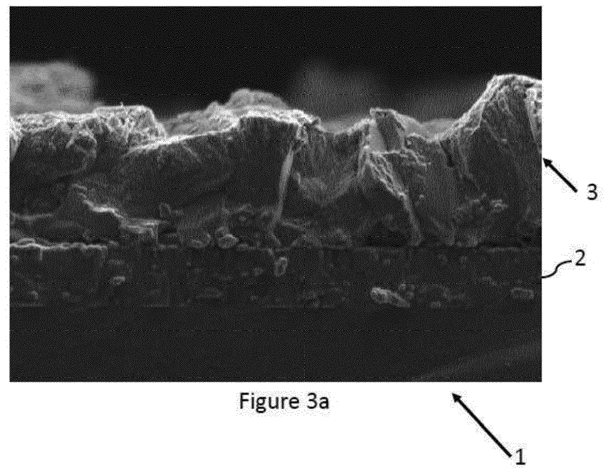

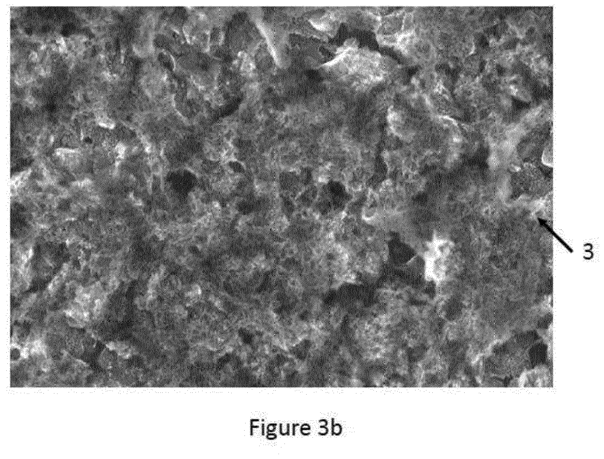

- Figure 3a (latera view) and Figure 3b (top view) are SEM images of a flat layer of the prepared conductive nanoporous catalytic matrix being a hybrid of the metal oxide MO and the molecular catalyst;
- Figure 4a and Figure 4b are SEM images of zinc oxide nanowires covered by a conductive nanoporous catalytic matrix being a hybrid of the metal oxide MO and the molecular catalyst;
- Figure 5 represents schematic deposition strategies of the hybrid layers on a conductive support, in this case, zinc oxide nanowires including a molecular catalyst;
- Figure 6 represents schematic deposition strategies of the hybrid layers on a CIGS solar cell, in this case, zinc oxide nanowires including a molecular catalyst;
- Figure 7 represents SEM image of the zinc oxide nanowire deposited during 30 minutes on ZnO:AI window layer on top of a CIGS solar cell;
- Figure 8 represents SEM image of the zinc oxide nanowire deposited during 30 minutes on substrate made of a glass coated with ZnO:Al layer deposited by ALD;
- Figure 9 represents SEM image of the zinc oxide nano porous MO layer with molecular catalyst deposited on ZnO:AI widow layer on top of a CIGS solar cell;
- Figure 10 represents schematic drawing of the experimental setup used for deposition of the hybrid layers;
- Figure 11 represents chronoamperometry registered during an electrolysis at -2.1 V vs. SCE, in CH₃CN + 0.1 M TBAPF₆ solution saturated with CO₂ + 0.6 M H₂O as proton source, using electrodes coated with the conductive nanoporous catalytic matrix being a hybrid of the metal oxide MO and the molecular catalyst (CoPc3), with an electrode surface equals to 0.5cm²;
- Figure 12 represents chronoamperometry registered during electrolysis at -1.5 V vs. SCE under illumination AM 1.5 (100 mW.cm⁻²), in CH₃CN + 0.1 M TBAPF₆ solution saturated with CO₂ + 0.6 M H₂O as proton source, using three different electrodes: a CIGS solar cell (Mo/CIGS/CdS/i-ZnO/ZnO:AI), a CIGS solar cell covered with a conductive nanoporous catalytic matrix without catalyst, and a CIGS solar cell covered with a conductive nanoporous catalytic matrix being a hybrid of the metal oxide MO and the molecular catalyst, with an electrode surface equals to 0.5 cm²;
- Figure 13 represents chronoamperometry registered during the electrolysis experiments in a CH₃CN + 0.1 M TBAPF₆ solution saturated with CO₂ + 0.6 M H₂O as proton source, using electrodes coated with the conductive nanoporous catalytic matrix being a hybrid of the metal oxide MO and the molecular catalyst (CoPc3) with various thickness, with an electrode surface equals to 0.5 cm²;
- Figure 14 represents chronoamperometry registered during the electrolysis experiments in a CH₃CN + 0.1 M TBAPF₆ solution saturated with CO₂ + 0.6 M H₂O as proton source, using electrodes zinc oxide nanowires covered by a conductive nanoporous catalytic matrix being a hybrid of the metal oxide MO and the molecular catalyst, with an electrode surface equals to 0.5 cm²;
- Figures 15 represents the X-ray photoelectron spectroscopy (XPS) analysis of zinc oxide nanowires covered by a conductive nanoporous catalytic matrix being a hybrid of the metal oxide MO and the molecular catalyst, data shows binding energies for cobalt (Co₂ₚ);
- Figures 16 represents the X-ray photoelectron spectroscopy (XPS) analysis of zinc oxide nanowires covered by a conductive nanoporous catalytic matrix being a hybrid of the metal oxide MO and the molecular catalyst, data shows binding energies for nitrogen (N₁ₛ).

### GENERAL DESCRIPTION

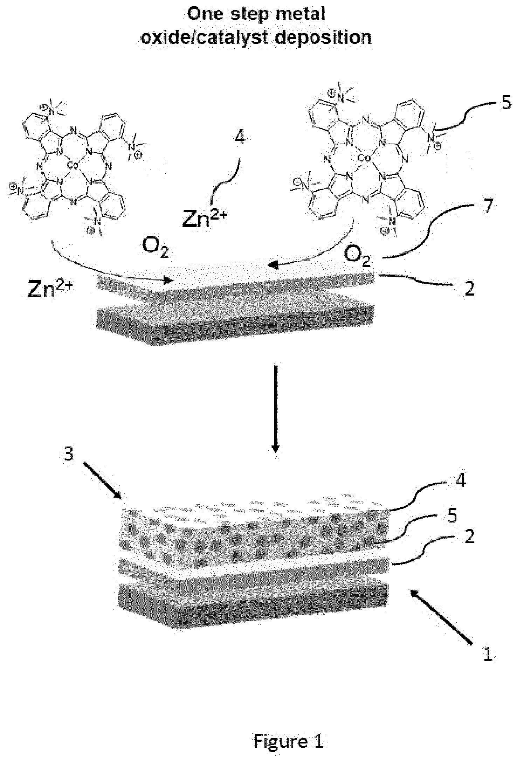

Here is presented, a porous electrode 1 for electrochemical or photoelectrochemical reduction CO₂ or CO, as shown in figure 1, comprising:
- a conductive or conductive transparent or photoconductive substrate 2, 2a, 2b;
- a conductive nanoporous catalytic matrix 3 on the substrate 2, 2a, 2b, which presents a hybrid of a metal oxide MO 4 with nanopores and molecular catalyst 5 which reduce CO or CO₂,

the conductive nanoporous catalytic matrix 3 being realized by electrodeposition of metal ions from a solvent solution which comprises also solubilized molecular catalyst 5,
the conductive nanoporous catalytic matrix 3 comprising a structure of metal oxide MO 4 with nanopores, which encapsulates and integrates homogeneously the molecular catalyst 5.

Advantageously, there is a growth of the metal oxide MO 4 during the electrodeposition forming a structure of metal oxide MO 4 with nanopores and integrating the molecular catalyst 5.

Advantageously, the molecular catalyst is in the structure of the metal oxide MO 4 and in the nanopores.

Advantageously, the conductive nanoporous catalytic matrix 3 is on the substrate 2, 2a or 2b, which is a hybrid of a metal oxide MO 4 and a molecular catalyst 5, realized by electrodeposition, comprising metal oxide MO 4 with nanopores, which encapsulates the metal molecular catalyst 5, the nanopores of the metal oxide MO 4 being formed during the electrodeposition.

Advantageously, the conductive nanoporous catalytic matrix 3, being a hybrid of a metal oxide MO 4 and a molecular catalyst 5 because the metal oxide MO 4 encapsulates the metal molecular catalyst 5, allows catalytic activity on the entire surface of the substrate. In addition, the molecular catalyst 5 remains in the conductive nanoporous catalytic matrix 3 without having been functionalized previously.

In the present invention, the term "homogeneously" defines that the molecular catalyst 5 is uniformly distributed throughout the porous electrode 1 without forming aggregates.

In the present invention, the term "hybrid" means that the conductive nanoporous catalytic matrix 3 is composed of disparate elements, a mixture.

Advantageously, a catalytic activity coming from the molecular catalyst 5 in the structure.

The porous electrode 1 can be transparent. Advantageously, the porous electrode 1 is transparent in the visible and near infrared range. Advantageously, the porous electrode 1 is presenting optical transmission higher than 60% at wavelengths between 250 and 1500 nm, more advantageously between 300 and 1450 nm, 350 and 1400 nm, 400 and 1350 nm or 450 and 1300 nm.

Thus, the porous electrode 1 can be used on solar cells.

Advantageously, the optical transmission is higher than 65%, 70%, 75%, 80%, 85%, 90% or 95%, for all the previous wavelength ranges.

Advantageously, all components of the porous electrode 1 have an optical transmission higher than 60% at wavelengths at least between 350 and 1300 nm.

The transparency of the components allows the visible light to pass through the nano porous or nanowire electrode for photoelectrochemical reduction.

### The substrate 2, 2a, 2b

Advantageously, the substrate 2 is photoconductive 2b or conductive or transparent and conductive 2a.

The substrate 2 may have a particular shape and/or surface structure. The surface structure may be porous, micro-structured, or nano-structured. The substrate 2 may have nanowires on its surface, or another nanostructure that increases the active surface (the contact area).

Advantageously, the substrate 2 is an electrode 2a or a photoelectrode 2b.

The substrate 2 can be a photoelectrode 2b comprising:
- a back contact;
- a p-type semiconductor absorber allowing the capture of a large part of the visible solar spectrum;
- a n-type semiconductor for forming a pn junction with the absorber for separation between electrons and holes;
- a top contact transparent and conductive layer for recovering the electrons formed at the pn junction.

Advantageously, the photoelectrode 2b is a simple or multijunction solar cell.

Advantageously, the substrate 2 comprises at least a metal oxide conductive top layer.

The metal oxide conductive top layer can be an aluminium doped zinc oxide, tin doped indium oxide (ITO), fluorine doped tin oxide (SnO₂:F). Advantageously, the thickness of the top layer is superior to 10 nm.

### The conductive nanoporous catalytic matrix 3

Advantageously, the conductive nanoporous catalytic matrix 3 is a hybrid of a metal oxide MO 4 and a molecular catalyst 5, realized by electrodeposition, comprising a metal oxide MO 4 which encapsulates the metal molecular catalyst 5 in the structure.

The conductive nanoporous catalytic matrix 3 is on the substrate 2.

Within the meaning of the present invention, the terms "the conductive nanoporous catalytic matrix" 3 can also be called indifferently: "nanostructured hybrid oxide layer for CO₂ or CO reduction", "nanostructured catalytic material", or "porous catalytic nanostructures".

The density and size of the nanopores depends on shape, size or type of molecular catalyst 5, the nanopores of metal oxide MO 4 are formed during the electrodeposition.

Thus, the density and/or size of the nanopores can be modified by changing the molecular catalyst.

Advantageously, the conductive nanoporous catalytic matrix 3 is transparent.

Advantageously, the conductive nanoporous catalytic matrix 3 is formed by mixing of the metal oxide MO 4 and the molecular catalyst 5.

Advantageously, the conductive nanoporous catalytic matrix 3 is formed by a continuous porous layer of metal oxide MO 4 and the molecular catalyst 5.

Advantageously, the conductive nanoporous catalytic matrix 3 is formed by a continuous porous layer of metal oxide MO 4 and the molecular catalyst 5 in the structure of the continuous porous layer.

Advantageously, the continuous porous layer has a thickness inferior to 1 micrometre.

Thus, this thickness allows a good catalytic rate to be maintained by the transport phenomena in the conductive nanoporous catalytic matrix 3 (charge transport and CO₂ or CO and/or proton transport).

In the present invention, the term "continuous porous" means that the layer comprising the metal oxide MO 4 structure covers the substrate 2, 2a, 2b with a uniform surface, and low roughness.

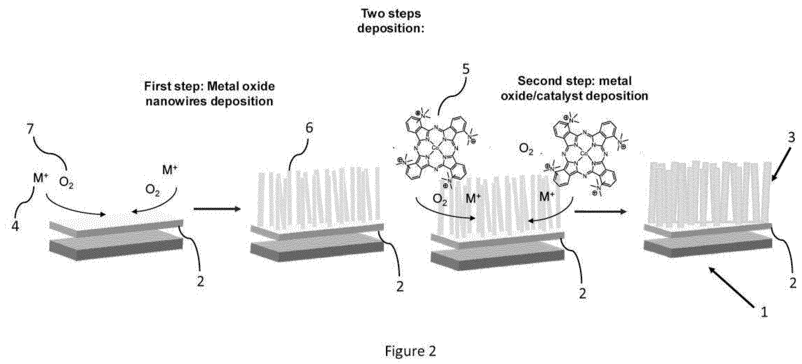

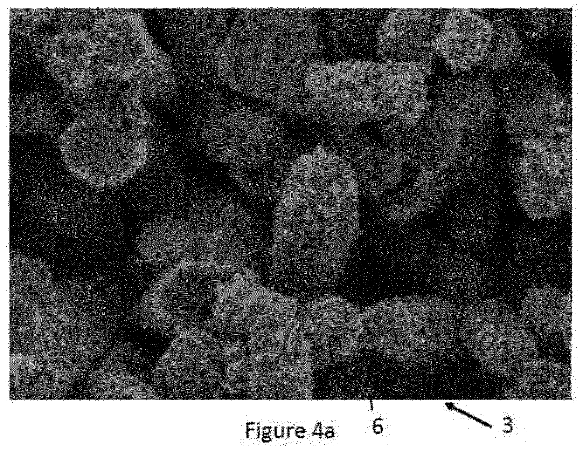

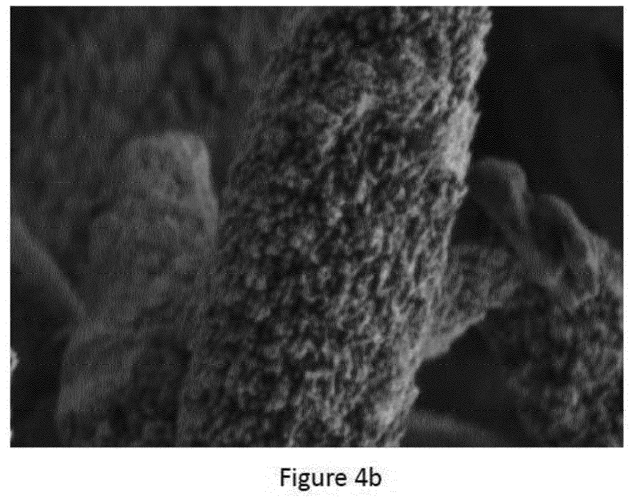

In another embodiment, the conductive nanoporous catalytic matrix 3 comprises an array of metal oxide coated nanowires 6 on the surface of the substrate 2, 2a, 2b, each metal oxide coated nanowire 6 being a metal oxide nanowire covered by a coating layer of metal oxide MO 4 with nanopores and molecular catalyst 5 which is in the coating layer, as shown in Figures 2, 4a, 4b, 6, 7 and 8.

The term "coating layer" means that said layer is a coating, the shape of the substrate 2 is preserved during the deposition of this coating, so the coating layer increases the thickness of the porous electrode 1 on the whole surface.

Advantageously, these layers can be deposited on top of a conductive electrode 2, 2a or on the window layer of solar cells 2b such as a copper indium gallium selenide solar cell (CIGS).

Advantageously, the coating layer having a thickness inferior to 50 nanometres.

This thickness allows the structure of the substrate 2 and the shape of the nanowires 6 to be maintained.

Advantageously, the nanowires 6 present a ratio length /diameter superior or equal to 1. More advantageously, the ratio thickness/diameter is superior to 2, 3, 4, 5, 6, 7, 8, 9 or 10.

In the present invention, the thickness of the nanowires is the distance between the substrate (the base) and the tip of the nanowires.

In another embodiment, the conductive nanoporous catalytic matrix 3 is covered by a layer of another metal oxide 4. The additional layer protects the porous electrode 1 from corrosion of the electrolyte.

For example, the additional layer is SnO₂, TiO₂, or Al₂O₃.

### The molecular catalyst 5

Advantageously, during the formation of the porous metal oxide 4 structure, the molecular catalyst 5 is integrated and encapsulated in said porous structure. The molecular catalyst 5 is embedded in the metal oxide structure and may also be in the nanopores of said porous layer.

The metal catalyst 5 may be both in the bulk (volume of the layer) of the metal oxide and in the nanopores, due to co-deposition.

Advantageously, the molecular catalyst 5 is soluble in the solution used for electrodeposition. More advantageously, the molecular catalyst 5 is water-soluble. Advantageously, the encapsulated water-soluble molecular catalyst in the conductive nanoporous catalytic matrix 3 is maintained in the conductive nanoporous catalytic matrix 3 even when in contact with an aqueous solution.

In the present invention, the porosity of the conductive nanoporous catalytic electrode allows the molecular catalyst to be in contact with the electrolyte solution and with the CO₂ and CO gases to be reduced. The porosity also allows the release of the CO₂ and CO once reduced.

Advantageously, the molecular catalyst 5 has a core with an earth-abundant transition metal such as Fe, Mn, Co, Ni, Sn, Cu or rare metals such as Ruthenium, Rhenium, Gold, Silver.

More advantageously, the molecular catalyst 5 is chosen among: metal quaterpyridines, metal porphyrins, metal corroles or metal phthalocyanines, which present water soluble substituents with for example metal being Co, Ni, Sn, Cu or Fe.

In another embodiment, the molecular catalyst 5 is chosen to reduce:
- selectively CO₂ to CO; or
- selectively CO₂ to an alcohol, such as methanol; or
- selectively CO₂ to formaldehyde; or
- selectively CO₂ to methane; or
- selectively CO₂ to multi-carbon molecules such as ethanol, ethylene.

In another embodiment, the molecular catalyst 5 is chosen to reduce:
- selectively CO to an alcohol, such as methanol; or
- selectively CO to formaldehyde; or
- selectively CO to methane; or
- selectively CO to multi-carbon molecules such as ethanol, ethylene.

Advantageously, the molecular catalyst 5 is without functions to fix it to the metal oxide MO 4 in the conductive nanoporous catalytic matrix 3.

Advantageously, the molecular catalyst 5 is without anchoring group.

Thus, the molecular catalyst 5 is not deposited using carboxylates, phosphonates, organosilanes, hydroxamates, and acetylacetonates functions that are usually appended to the ligand of the molecular catalyst s for immobilization on metal oxide 4 surfaces.

Advantageously, the reduction of CO₂ or CO produces a selective product, the selective product depends on the molecular catalyst 5.

Advantageously, the porous electrode 1 has a concentration of molecular catalyst 5 equal or superior to 0.5 nmol per cm² of the porous electrode 1. More advantageously, the concentration of molecular catalyst in the structure is superior to 1 nmol /cm², 2 nmol /cm², 3 nmol /cm², 4 nmol /cm², 5 nmol /cm², 6 nmol /cm², or 7 nmol /cm² of the porous electrode 1.

In the present invention, the porous electrode 1 has catalytic activity despite the low amount of molecular catalyst 5, furthermore the catalytic activity can be improved by increasing the amount of molecular catalyst 5.

### The metal oxide MO 4

Advantageously, the metal oxide MO 4 is chosen from the following list: aluminium oxide, titanium oxide, or a doped wide band gap metal oxide film. More advantageously, the metal oxide MO 4 is zinc oxide (ZnO).

Advantageously, the doped wide band gap metal oxide film has E_{g} > 2.4 eV.

For example, ZnO presents remarkable properties that make it a good candidate for preparing a photoelectrode. It is transparent thanks to its wide bandgap (3.2 eV) and has controllable properties of conductivity depending on the doping level. Moreover, ZnO, in contrast to many other wide bandgap semiconductors, has the unique advantage that it can be easily prepared in high quality by solution routes. This allows low-temperature (mostly <100°C) cost-effective deposition processes, and the solution environment can be used to promote highly selective self-assembly to generate structures ranging from dense thin films to nanostructures.

Advantageously, a combination of the metal oxide MO 4 and the molecular catalyst 5 is chosen to improve the catalytic activity. For example, ZnO with CoPc3.

### Process for realizing a porous electrode 1

In another embodiment, the invention relates to a process for realizing a porous electrode 1 for CO₂ or CO electrochemical or photoelectrochemical reduction on a conductive or conductive transparent or photoconductive substrate 2, 2a, 2b, the process comprising the following steps:
- a step a): solubilisation of metal ions, molecular catalyst 5, and an oxygen precursor 7 in a solvent solution;
- a step b): applying a voltage at the substrate 2, 2a, 2b, in the solvent solution for realizing an electrodeposition of metal ions, to form a conductive nanoporous catalytic matrix 3,

the growth of the metal oxide MO 4 during the electrodeposition integrating the molecular catalyst 5,
the conductive nanoporous catalytic matrix 3 presents a hybrid of metal oxide MO (4) with nanopores, which encapsulates and integrates homogeneously the molecular catalyst 5.

Advantageously, the electrodeposition causes an encapsulation of the molecular catalyst 5 in the metal oxide structure, the conductive nanoporous catalytic matrix 3 being a hybrid of the metal oxide MO 4 and the molecular catalyst 5, which reduces CO₂ or CO due to the catalytic properties of the encapsulated molecular catalyst 5.

Within the meaning of the present invention, the process can also be called "a molecular catalyst 5 encapsulation" or "one-step deposition", as show in the figures.

This way of incorporating a molecular catalyst 5 into the conductive nanoporous catalytic matrix 3 allows to: use small quantities of non-functionalized catalyst as compared to other preparation methods, incorporate the molecular catalyst 5 homogeneously in the metal oxide 4, improve the catalytic activity of the molecule itself and keep the high selectivity of the molecular catalyst 5.

Advantageously, electrodeposition allows a metal oxide/molecular catalyst co-deposit to be made. Thus, the advantage is that the molecular catalyst remains accessible through the porosity of the material (of the deposited metal oxide layer). However, electrodeposition is a simple, one-step method that can be done at low temperatures < 100 °C and over a large area.

Advantageously, the substrate 2 is conductive 2b or transparent and conductive 2a.

The substrate 2 may have a particular shape and/or surface structure. The surface structure may be porous, micro structured, or nano structured. The substrate 2 may have nanowires on its surface, or another nanostructure that increases the active surface (contact area).

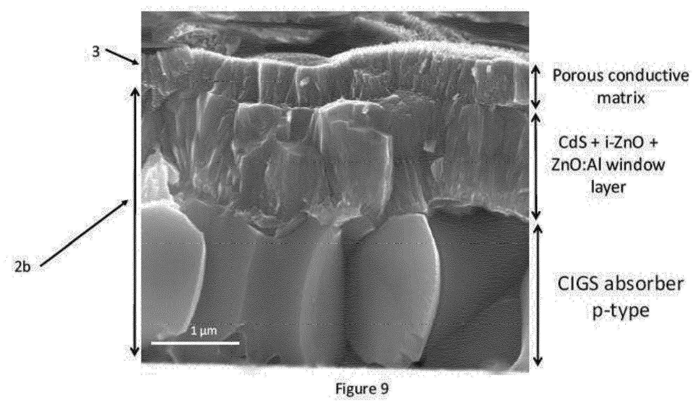

Advantageously, the substrate 2 is an electrode 2a or a photoelectrode 2b, as shown in Figure 9.

The substrate 2 can be a photoelectrode 2b comprising:
- a back contact;
- a p-type semiconductor absorber allowing the capture of a large part of the visible solar spectrum;
- a n-type semiconductor for forming a pn junction with the absorber for separation between electrons and holes;
- a top contact transparent and conductive layer for recovering the electrons formed at the pn junction.

Advantageously, the photoelectrode 2b is a simple or multijunction solar cell.

Advantageously, the substrate 2 comprises at least a metal oxide conductive top layer.

The metal oxide conductive outer layer can be an aluminium doped zinc oxide (AZO), tin doped indium oxide (lnO₂:Sn, ITO), fluorine doped tin oxide (SnO₂:F) or any other transparent conductive oxides. Advantageously, the thickness of the top layer is larger than 10 nm.

For example, the substrate 2a has an aluminium doped zinc oxide (AZO) conductive layer of 380 nm thick with sheet resistance from 20.1 to 28.2 × 10⁻³ Ω/sq, deposited by Atomic Layer Deposition (ALD), on a glass substrate 2 mm thick.

Advantageously, the substrate 2a was ultrasonically sequentially cleaned in acetone, 2-propanol, and water each for 5 min, before the whole process.

Advantageously, the substrate 2a was activated in a KOH solution pH 10.5 for 2 min and finally rinsed with distilled water prior the electrodeposition.

Advantageously, the substrate 2b was rinsed with 2-propanol and distilled water then activated in a KOH solution pH 10.5 for 2 min and finally rinsed with distilled water prior the electrodeposition.

The process is carried out on a substrate 2 with one or a combination of the following:
- conductive or transparent and conductive electrode;
- an electrode or a photoelectrode;
- a photoelectrode comprising:
   - a back contact;
   - a p-type semiconductor absorber allowing the capture of a large part of the visible solar spectrum;
   - a n-type semiconductor for forming a pn junction with the absorber for separation between electrons and holes;
   - a top contact transparent and conductive layer for recovering the electrons formed at the pn junction;
- a simple or multi-junction solar cell;
- a substrate comprising at least a metal oxide conductive top layer.

Advantageously, the reduction of CO₂ or CO produces a selective product, the selective product depends on the molecular catalyst 5.

Advantageously, in the step a) of metal ions solubilisation in a solvent solution, the solvent solution contains also a molecular catalyst 5 and an oxygen precursor 7.

According to various embodiments, the metal ions can be Zn²⁺, Al³⁺, Ti²⁺.

Advantageously, the solvent solution is a water mixture comprising zinc salt such as zinc chloride and the molecular catalyst 5 being water soluble in the solvent solution which is water, and the electrodeposition being realized at a temperature inferior to 100°C. The zinc salt can be chloride or nitrate.

More advantageously, the solvent solution comprises an oxygen precursor 7 such as oxygen from the air. The solvent solution can contain nitrates or oxygenated water.

For example, the method for ZnO electrodeposition is to form an excess of hydroxide ions through the reduction of an oxygen precursor, such as oxygen, nitrate ions, or peroxide species. By using chloride and oxygen precursor, the deposition can be done in a pH range from 5 to 7.

Advantageously, the solvent solution is a mixture of zinc chloride, potassium chloride, oxygen and the molecular catalyst 5.

For example, the solvent solution is an aqueous solution of 5 mM ZnCl₂, 0.1 M KCl, 0-8.10⁻⁴ M of dissolved O₂, and 50 µM of a Cobalt phthalocyanine molecule (CoPc3) bearing four trimethylammonium groups.

Thus, the Cl⁻ ions in the solution will promote doping of the zinc oxide catalytic matrix, which ensures that the deposited oxide is conductive.

The molecular catalyst 5 is in the nanopores of the conductive nanoporous catalytic matrix 3 for CO₂ or CO reduction.

Advantageously, the molecular catalyst 5 is water-soluble. More advantageously, the molecular catalyst 5 includes an earth-abundant metal.

Advantageously, the molecular catalyst 5 is chosen among: metal quaterpyridines, metal porphyrins, metal phthalocyanines or metal corroles, which presents water soluble substituents, with for example metal being Co, Ni, Sn, Cu or Fe.

For example, the molecular catalyst 5 is Cobalt phthalocyanine molecule (CoPc3) bearing four trimethylammonium groups.

Advantageously, the concentration of molecular catalyst 5 used is inferior to 10 nmol/cm², more advantageously, inferior to 9 nmol/cm², 8 nmol/cm², 7 nmol/cm², 6 nmol/cm², 5 nmol/cm², or 4 nmol/cm².

In another embodiment, the molecular catalyst 5 is chosen to reduce:
- selectively CO₂ to CO; or
- selectively CO₂ to an alcohol, such as methanol; or
- selectively CO₂ to formaldehyde; or
- selectively CO₂ to methane; or
- selectively CO₂ to multi-carbon molecules such as ethanol, ethylene.

In another embodiment, the molecular catalyst 5 is chosen to reduce:
- selectively CO to an alcohol, such as methanol; or
- selectively CO to formaldehyde; or
- selectively CO to methane; or
- selectively CO to multi-carbon molecules such as ethanol, ethylene.

The step b) of the process is an electrodeposition of the metal ions to form the conductive nanoporous catalytic matrix 3 of metal oxide MO 4 on a conductive or conductive transparent or photoconductive substrate 2, 2a or 2b.

Advantageously, the electrodeposition is made at a given potential and a given temperature.

Advantageously, the given potential is comprised between -0.8 and -1.4 V vs SCE, more advantageously between -0.9 and -1.3, or -1.0 and -1.2 V vs SCE.

During the formation of the conductive nanoporous catalytic matrix 3, the metal ions contained in the solvent solution are attracted to the substrate and deposited on its surface. During the deposition, the molecular catalyst contained also in the solvent solution is encapsulated in the formed layer.

Advantageously, the step b) of electrodeposition of the metal ions forms a conductive nanoporous catalytic matrix 3 of metal oxide MO 4 with nanopores, which encapsulates the molecular catalyst, directly on the substrate 2, 2a, 2b, to obtain a continuous porous layer

For example, the realization of the conductive nanoporous catalytic matrix 3 was carried out potentiostatically at -1.0 V vs SCE in an aqueous solution, 5 mM ZnCl₂, 0.1 M KCI, 0-8.10⁻⁴ M O₂ dissolved and 50 µM of a Cobalt phthalocyanine molecule (CoPc3) bearing four trimethylammonium groups In another embodiment, the process comprises a step a0) and a step b0), before the step a):
- a step a0): solubilisation of metal ions and an oxygen precursor 7in a first solvent solution;
- a step b0): electrodeposition of the metal ions to form nanowires (6) of metal oxide MO 4 on the substrate 2, 2a, 2b;
- the step a): solubilisation of the metal ions with molecular catalyst 5 and an oxygen precursor 7 in a second solvent solution;
- the step b): electrodeposition of the metal ions 5 of the second solvent solution to form a conductive nanoporous catalytic matrix 3 of metal oxide MO 4 with nanopores with encapsulated molecular catalyst on the nanowires 6 which are coated by this conductive nanoporous catalytic matrix 3.

Within the meaning of the present invention, the process comprising the realization of nanowires 6 of metal oxide MO 4, is also called "two-steps deposition", as shown in the figures.

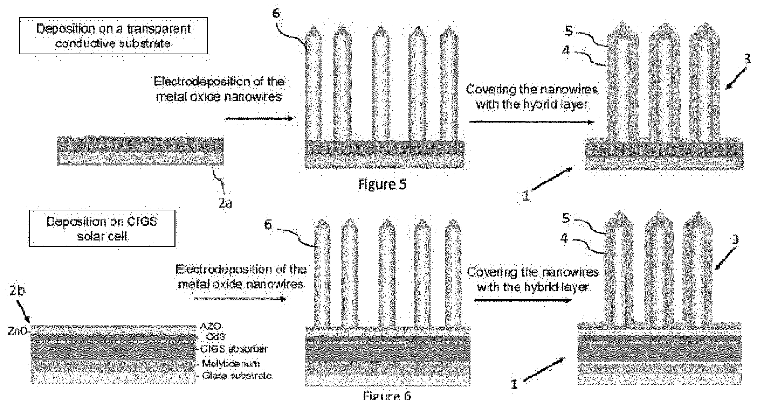

Thus, the substrate 2 has a nanostructure on its surface, such as nanowires 6, as shown in Figures 5, 6, 7 and 8.

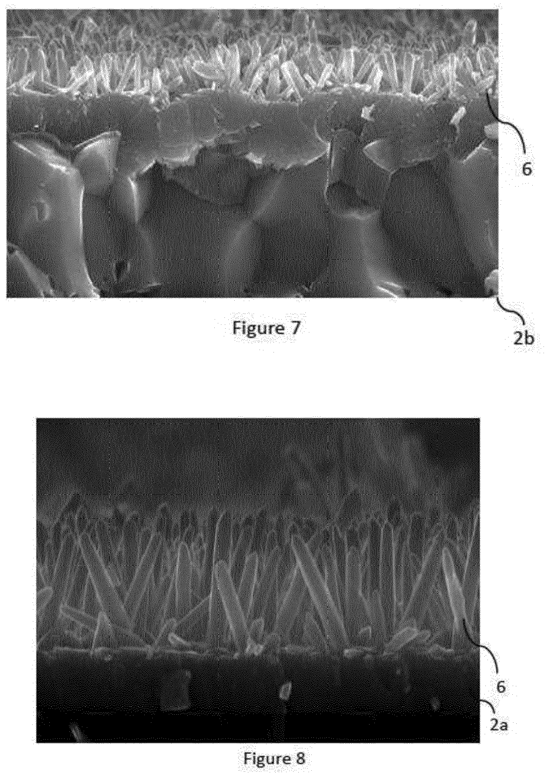

The nanowires 6 can also be deposited on a photocathode 2b, as shown in Figures 6 and 7.

Advantageously, the electrodeposition of the metal ions has a given potential and a given temperature.

Advantageously, the given potential is comprised between -0.4 and -1.4 V vs SCE, more advantageously between -0.9 and -1.3, or -1.0 and -1.2 V vs SCE.

Advantageously, the given temperature is comprised between 40°C and 100°C, more advantageously between 50°C and 90°C, or 60°C and 80°C.

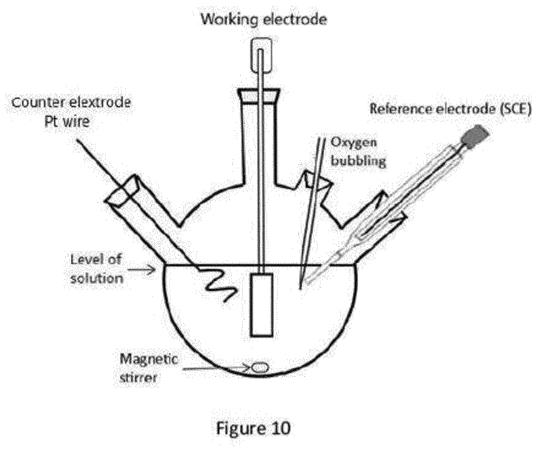

Advantageously, the nanowires 6 and the conductive nanoporous catalytic matrix 3 were electrodeposited using a three electrodes setup, as shown in Figure 10.

A schematic drawing of the experimental setup is presented in Figure 10. For example, the reference electrode is a Saturated Calomel Electrode (SCE) with a potential of +0.244 V vs. SHE at 25 °C. The counter electrode is a platinum wire cleaned ultrasonically prior electrodeposition. Working electrodes are the mentioned ZnO:Al/glass (transparent conductive electrode) or the CIGS solar cell electrode (photoelectrode).

Advantageously, the first solvent solution being a mixture of zinc chloride, potassium chloride and soluble oxygen.

For example, the deposition of this nanowire 6 array was carried out potentiostatically at -1.4 V vs SCE in an aqueous solution, 0.2 mM ZnCl₂, 0.1 M KCI maintained at 80°C.

Advantageously, the second solvent solution is a water mixture comprising zinc salt such as zinc chloride and the molecular catalyst 5 being water soluble in the solvent solution which is water, and the electrodeposition being realized at a temperature inferior to 100°C. The zinc salt can be chloride or nitrate.

More advantageously, the second solvent solution comprises an oxygen precursor 7 such as oxygen from the air. The solvent solution can contain nitrates or oxygenated water.

For example, the method for ZnO electrodeposition is to form an excess of hydroxide ions through the reduction of an oxygen precursor, such as oxygen, nitrate ions, or peroxide species. By using chloride and oxygen precursor, the deposition can be done in a pH range from 5 to 7.

Advantageously, the second solvent solution is a mixture of zinc chloride, potassium chloride, oxygen and the molecular catalyst 5.

For example, the second solvent solution is an aqueous solution of 5 mM ZnCl₂, 0.1 M KCI, 0-8.10⁻⁴ M of dissolved O₂, and 50 µM of a Cobalt phthalocyanine molecule (CoPc3) bearing four trimethylammonium groups.

Advantageously, the substrate 2 with nanowires 6 is rinsed with water and dried in air at 100°C before the step a).

Advantageously, the conductive nanoporous catalytic matrix 3 is realized by electrodeposition, with conditions for controlling:
- diameter and thickness or height of the nanowires 6; and
- diameter and thickness or height of the conductive nanoporous catalytic matrix 3 which rest on the coated nanowires 6.

For example, in the case of the nanowires 6, the temperature affects the solubility of the oxygen precursor 7. The solubility of oxygen precursor 7 decreases as the solution temperature increases which significantly reduces the kinetics for the formation of the nanowires 6. However, the crystallinity of the deposited films increases as the solution temperature increases. Optimal temperatures range from 60 to 85°C. The applied potential affects the preferred orientation of the nanowires 6. The diameter and density of nanowires 6 increase as the potential applied increased. The metal ions concentration affects the diameter and the nanowire 6 density. The thickness of the nanowires 6 is controlled by measuring the charge being transferred during the electrodeposition process, thus it is directly correlated to the deposition time.

For example, in the case of the conductive nanoporous catalytic matrix 3, the thickness of the catalytic matrix 3 is controlled by measuring the charge being transferred during the electrodeposition process, thus it is directly correlated to the deposition time. The applied potential affects the molecular catalyst loading. The amount of molecular catalyst into the films increases with more negative potentials.

Advantageously, oxygen gas being bubbled for 20 min prior to the step a) and the step b), and the same gas flow was maintained during the whole deposition process.

Advantageously, the solution being stirred at 800 rpm.

### Application

The invention relates to a porous electrode used in CO₂ or CO reduction, the selectivity of the porous electrode 1 depending on the molecular catalyst 5 used.

In another embodiment, depending on the use of the porous electrode 1, the molecular catalyst 5 is chosen to reduce:
- selectively CO₂ to CO; or
- selectively CO₂ to an alcohol, such as methanol; or
- selectively CO₂ to formaldehyde; or
- selectively CO₂ to methane; or
- selectively CO₂ to multi-carbon molecules such as ethanol, ethylene.

In another embodiment, depending on the use of the porous electrode 1, the molecular catalyst 5 is chosen to reduce:
- selectively CO to an alcohol, such as methanol; or
- selectively CO to formaldehyde; or
- selectively CO to methane; or
- selectively CO to multi-carbon molecules such as ethanol, ethylene.

### Results and examples

For example, the following molecular catalyst 5 was used:

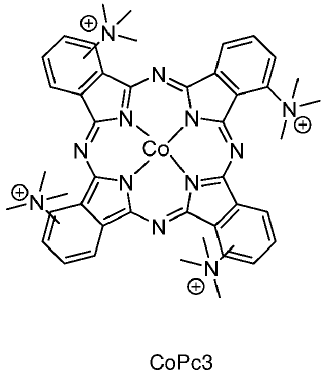

For example, the porous electrodes 1 with the conductive nanoporous catalytic matrix 3 were used for the electrochemical reduction of CO₂ in acetonitrile adding 0.1 M of Tetrabutylammonium hexafluorophosphate (NBu₄PF₆) salt as supporting electrolyte, using electrodes with a surface of 0.5 cm². The results of these experiments show that the conductive nanoporous catalytic matrix 3 is electrochemically active to perform CO₂ reduction to CO.

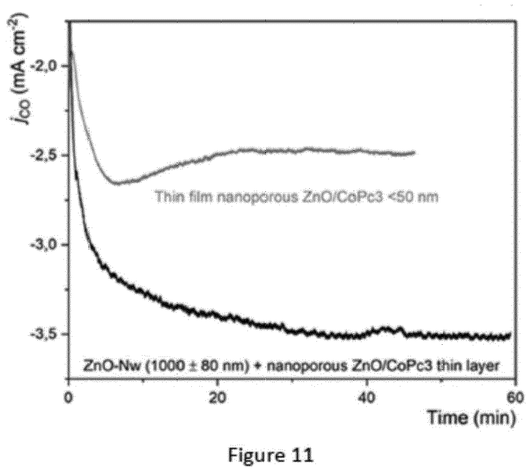

For example, the prepared ZnO:AI (AZO) electrodes with the hierarchical structures have shown current densities up to 3.5 mA cm⁻² during electrolysis experiments at an applied potential of -2.1 V vs. SCE, as shown in figure 11. In terms of efficiency and selectivity, the porous electrodes present high Faradaic efficiencies and high selectivity of ca. 90% toward CO formation. Such high selectivity and current result from the combination of conductive nanoporous catalytic matrix 3 with the molecular catalyst 5 and could not be obtained from the use of individual components (oxide or molecular catalyst alone).

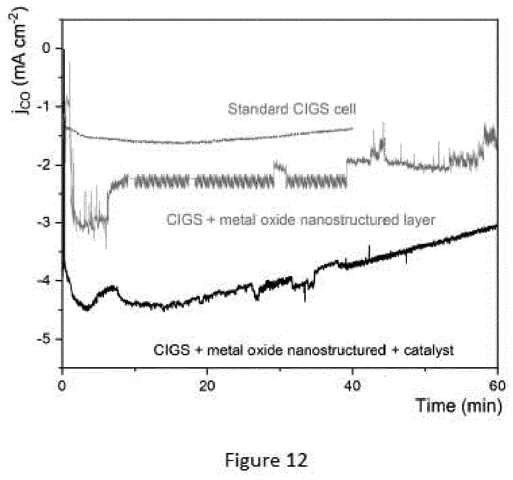

Based on these encouraging results, these conductive porous matrices 3 have been integrated to standard CIGS solar cell photoelectrodes 2b. The performance of these electrodes towards CO₂ reduction reaction has been studied. A standard CIGS solar cell is compared to solar cells with the conductive nanoporous catalytic matrix 3 without molecular catalyst 5, and with a combination of conductive nanoporous catalytic matrix 3 and the molecular catalyst 5. Controlled-potential photoelectrolysis experiments in acetonitrile 0.1 M TBAPF₆ solution have confirmed the photoreduction of CO₂, as shown in figure 12. The photoelectrolysis experiments with a CIGS electrode covered with a conductive nanoporous catalytic matrix 3, maintained at a potential of -1.5 V vs. SCE with front illumination AM1.5G (100 mW cm⁻²) produced CO with a total FE and selectivity of ca. 95%. A high current density with a mean value of 4.2 mA cm⁻² was obtained during a one-hour electrolysis experiment. From the deposited layers, we may note an improved catalytic effect from the conductive nanoporous catalytic matrix 3 without molecular catalyst 5 as compared to the 'standard' CIGS solar cells with good selectivity and high faradaic efficiencies. The addition of the molecular catalyst 5 led to the highest catalytic activity suggesting a combination of catalytic effects of the metal oxide 4 and molecular catalyst 5.

For example, the following molecular catalyst 5 can be used in the porous electrode 1:
- Quaterpyridine metal complexes: 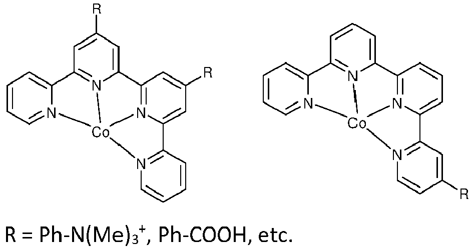
- Phthalocyanine metal complexes: 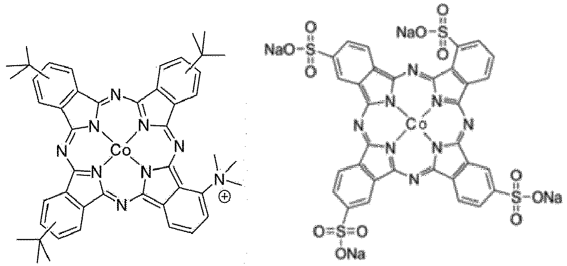
- Porphyrin metal complexes: 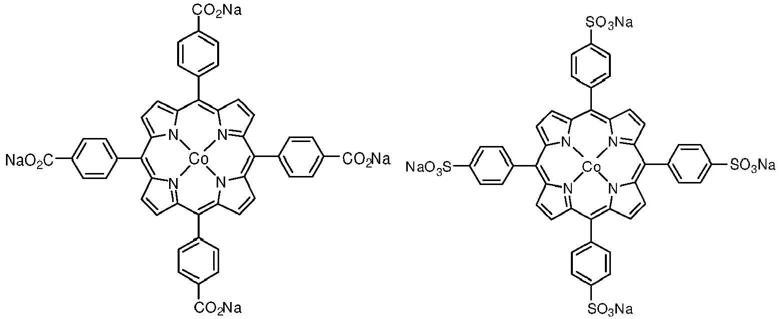 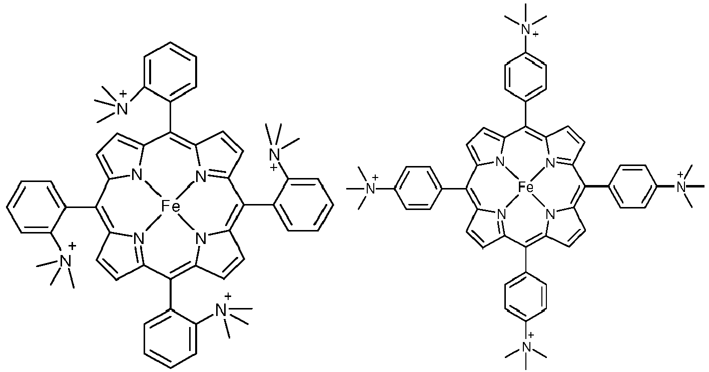
- Corrole metal complexes :

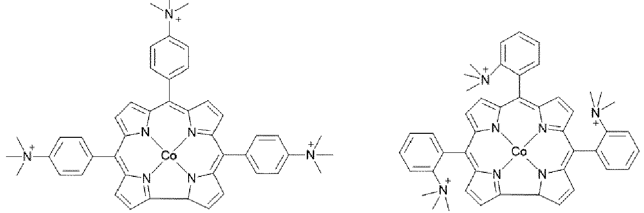

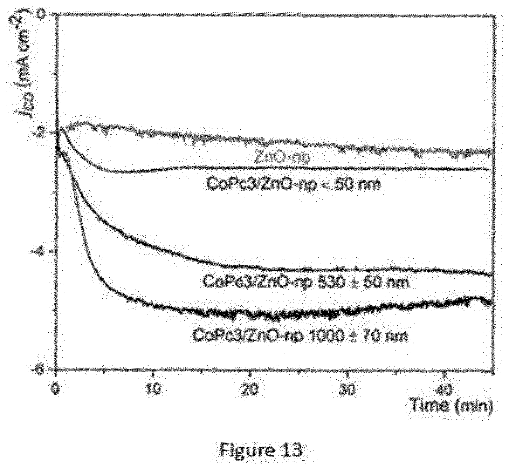

Electrolysis experiments using electrodes containing several thicknesses of the zinc oxide nano porous MO layers with molecular catalyst 5 were performed in order to assess their catalytic performance, as shown in Figure 13.

The table below shows the summary of results obtained from the analysis of the gas product generated during the electrolysis experiments using electrodes with various thickness of the conductive nanoporous catalytic matrix 3 of ZnO containing the molecular catalyst 5.

| **Conductive nanoporous catalytic matrix thickness** | **Catalyst Concentratio n (nmol/cm²)** | ***J* (mA.cm⁻²)** | **Faradaic Efficiency** | | | **Selectivity** | | **TON for CO** | **TOF for CO (s⁻¹)** |
|---|---|---|---|---|---|---|---|---|---|
| | | | **FE CO** | **FE H₂** | **FE total** | **CO** | **H2** | | |
| ZnO-Nano porous 1000 ± 100 nm | 0.0 | -2.5 | 85.1% | 9.0% | 94.1% | 89.9% | 10.1% | | |
| ZnO-Nano porous /catalyst < 50nm | 0.6 | -2.8 | 103.2 % | 2.6% | 105.8 % | 97.5% | 2.5% | 19100 | 15.9 |
| ZnO-Nano porous /catalyst 500 ± 50 nm | 2.7 | -3.5 | 100.9 % | 1.6% | 102.5 % | 98.4% | 1.6% | 4723 | 3.2 |
| ZnO-Nano porous /catalyst 1000 ± 70 nm | 3.4 | -4.6 | 96.1% | 1.1% | 97.3% | 98.8% | 1.2% | 8713 | 4.5 |

In the present invention, the TON (Turnover number) for CO formation is calculated upon dividing the mol number of CO formed during electrolysis by the mol number of molecular catalysts at the electrode. The TOF (Turnover frequency) for CO formation represents the rate of the catalysis and is calculated upon dividing TON by the electrolysis total time (it is thus an average rate).

After one hour of electrolysis experiments the electrodes have shown high selectivities >90% towards CO production, reaching current densities around -4.6 mA cm⁻² with high Faradaic efficiency ≈ 100%.

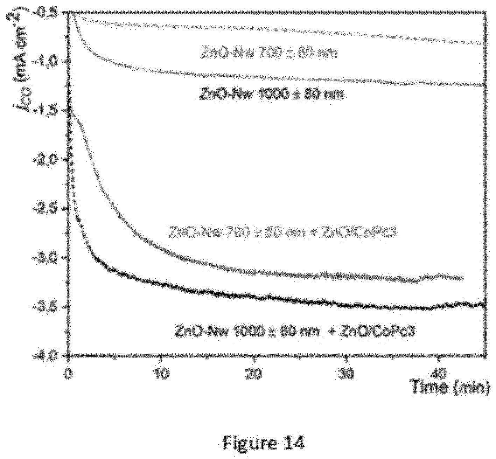

Electrolysis experiments using zinc oxide nanowires electrodes coated by a zinc oxide nano porous MO 4 thin coating layer with the molecular catalyst 5 were performed in order to assess their catalytic performance, as shown in Figure 14.

The table below summarizes the results obtained from the analysis of the gas product generated during the electrolysis experiments using zinc oxide nanowires electrodes coated by a zinc oxide nano porous MO 4 thin coating layer with the molecular catalyst 5.

| **ZnO nanowires covered with ZnO-Nano porous /catalyst thickness** | **Catalyst concentration (nmol.cm⁻²)** | **Average j (mA.cm⁻²)** | **Faradaic Efficiency** | | | **Selectivity** | | **TON for CO** | **TOF for CO (s⁻¹)** |
|---|---|---|---|---|---|---|---|---|---|
| | | | **FE CO** | **FE H₂** | **FE total** | **CO** | **H₂** | | |
| ZnO-nw 700 + 50 nm | 0.69 | -2.45 | 106.7% | 6.46% | 113.2% | 94.3% | 5.7% | 11848 | 6.6 |
| ZnO-nw 1000 ± 80 nm | 0.73 | -3.40 | 86.7% | 2.7% | 89.4% | 97.0% | 3.0% | 19258 | 8 |

After one hour of electrolysis experiments the electrodes have shown high selectivity >90% towards CO production, with current density values that increase when the thickness of the nanowires 6 is increased. Current density values ca. -3.5 mA cm⁻² were reached in samples with a small quantity of the molecular catalyst 5 (0.73 nmol cm⁻²).

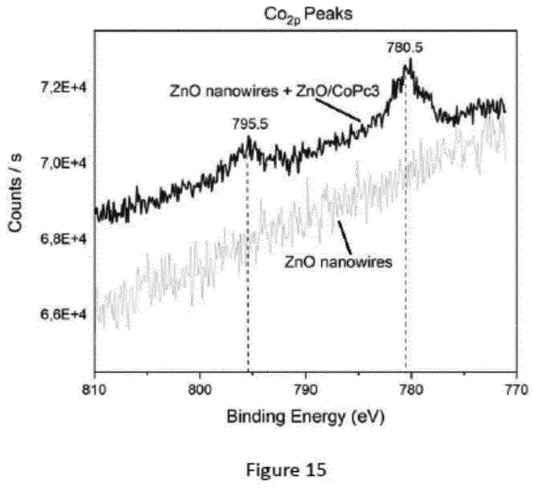

As shown in figure 15 from the XPS analysis, two peaks were observed for the cobalt (Co₂ₚ) at binding energies of 795.5 and 780.5 eV respectively, confirming the presence of the cobalt metallic center of the molecular catalyst at the surface of the zinc oxide nanowires. The blank response of the zinc oxide nanowires without the hybrid layer of MO and the molecular catalyst is also shown, no peak being observed in this energy range.

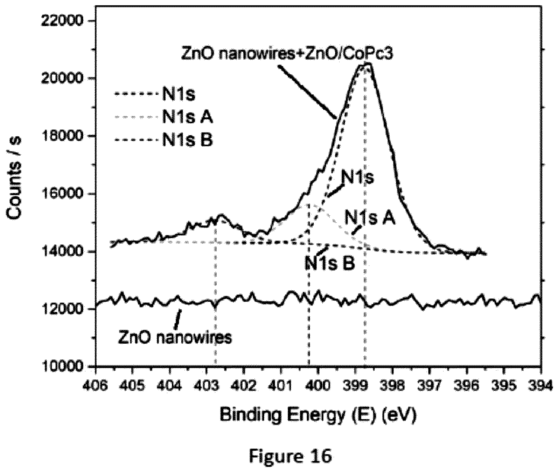

As shown in figure 16 from the XPS analysis, three peaks were observed for the Nitrogen (N₁ₛ) at binding energies of 402.7, 398.7 and 400.3 eV respectively, confirming the presence of the nitrogen atoms of the molecular catalyst (ligand) at the surface of zinc oxide nanowires. The blank response of the zinc oxide nanowires without the hybrid layer of MO and the molecular catalyst is also shown, no peak being observed in this energy range.

## Claims

1. Porous electrode (1) for electrochemical or photoelectrochemical reduction of CO₂ or CO **characterized by**:
- a conductive or conductive transparent or photoconductive substrate (2, 2a, 2b);
- a conductive nanoporous catalytic matrix (3) on the substrate (2, 2a, 2b), which presents a hybrid of a metal oxide MO (4) with nanopores and molecular catalyst (5) which reduce CO₂ or CO,
the conductive nanoporous catalytic matrix (3) being realized by electrodeposition of metal ions from a solvent solution which comprises also solubilized molecular catalyst (5),
the conductive nanoporous catalytic matrix (3) comprising a structure of metal oxide MO (4) with nanopores, which encapsulates and integrates homogeneously the molecular catalyst (5).

2. Porous electrode (1) according to claim 1, wherein the molecular catalyst (5) is without anchoring group.

3. Porous electrode (1) according to claims 1 or 2, wherein the conductive nanoporous catalytic matrix (3) is formed by a continuous porous layer of metal oxide MO (4) and the molecular catalyst (5) in the structure of the continuous porous layer.

4. Porous electrode (1) according to claims 1 or 2, wherein the conductive nanoporous catalytic matrix (3) comprises an array of metal oxide coated nanowires (6) on the surface of the substrate (2, 2a, 2b), each metal oxide coated nanowire (6) being a metal oxide nanowire covered by a coating layer of metal oxide MO (4) with nanopores and molecular catalyst (5) which is in the coating layer.

5. Porous electrode (1) according to one of claims 1 to 4, wherein the porous electrode (1) has a concentration of molecular catalyst (5) equal or superior to 0.5 nanomole per cm² of the substrate (2, 2a, 2b).

6. Porous electrode (1) according to one of claims 1 to 5, wherein the porous electrode (1) is presenting optical transmission higher than 60% at wavelengths between 350 and 1300 nm.

7. Porous electrode (1) according to one of claims 1 to 6, wherein the substrate (2) is a photoelectrode (2b) comprising:
- a back contact;
- a p-type semiconductor absorber allowing the capture of a large part of the visible solar spectrum;
- a n-type semiconductor for forming a pn junction with the absorber for separation of electrons and holes;
- a top contact transparent and conductive layer for recovering the electrons formed at the pn junction;
advantageously, the photoelectrode (2b) is a simple or multijunction solar cell.

8. Porous electrode (1) according to one of claims 1 to 7, wherein the molecular catalyst (5) is water-soluble.

9. Porous electrode (1) according to one of claims 1 to 8, wherein the molecular catalyst (5) is chosen among: metal quaterpyridines, metal porphyrins, metal phthalocyanines or metal corroles, which presents water soluble substituents, with for example metal being Co, Ni, Sn, Cu or Fe.

10. Porous electrode (1) according to one of claims 1 to 9, wherein the metal oxide MO (4) is chosen from the following list: aluminum oxide, titanium oxide, or a doped wide band gap metal oxide.

11. Porous electrode (1) according to one of claims 1 to 10, wherein the metal oxide MO (4) is zinc oxide.

12. Process for realizing a porous electrode (1) for CO or CO₂ electrochemical or photoelectrochemical reduction on a conductive or conductive transparent or photoconductive substrate (2, 2a, 2b), according to one of claims 1 to 11,
the process comprising the following steps:
- a step a): solubilisation of metal ions, molecular catalyst (5), and an oxygen precursor (7) in a solvent solution;
- a step b): applying a voltage at the substrate (2, 2a, 2b) in the solvent solution for realizing an electrodeposition of metal ions, to form a conductive nanoporous catalytic matrix (3), the growth of the metal oxide MO (4) during the electrodeposition integrating the molecular catalyst (5),
the conductive nanoporous catalytic matrix (3) presents a hybrid of metal oxide MO (4) with nanopores, which encapsulates and integrates homogeneously the molecular catalyst (5).

13. Process according to claim 12, wherein the solvent solution is a mixture comprising zinc salt such as zinc chloride and the molecular catalyst (5), the molecular catalyst (5) being water soluble in the solvent solution which is water, and the electrodeposition being realized at a temperature inferior to 100°C.

14. Process according to claims 12 or 13, wherein the molecular catalyst (5) is chosen among: metal quaterpyridines, metal porphyrins, metal phthalocyanines or metal corroles, which present water soluble substituents, with for example metal being Co, Ni, Sn, Cu or Fe.

15. Process according to one of claims 12 to 14, wherein the step b) of electrodeposition of the metal ions forms a conductive nanoporous catalytic matrix (3) of metal oxide MO (4) with nanopores, which encapsulates the molecular catalyst, directly on the substrate (2, 2a, 2b), to obtain a continuous porous layer.

16. Process according to one of claims 12 to 14, wherein the process comprises a step a0) and a step b0), before the step a):
- a step a0): solubilisation of metal ions and an oxygen precursor (7) in a first solvent solution;
- a step b0): electrodeposition of the metal ions to form nanowires (6) of metal oxide MO (4) on the substrate (2, 2a, 2b);
- the step a): solubilisation of the metal ions with molecular catalyst (5) and an oxygen precursor (7) in a second solvent solution;
- the step b): electrodeposition of the metal ions (5) of the second solvent solution to form the conductive nanoporous catalytic matrix (3) of metal oxide MO (4) with nanopores with encapsulated molecular catalyst on the nanowires (6) which are coated by this conductive nanoporous catalytic matrix (3).
